(19) Europäisches Patentamt
European Patent Office
Office européen des brevets

(11) EP 0 536 588 B1

(12) EUROPÄISCHE PATENTSCHRIFT

(45) Veröffentlichungstag und Bekanntmachung des Hinweises auf die Patenterteilung:
**27.11.1996 Patentblatt 1996/48**

(51) Int Cl.[6]: **C08F 251/00**, C08L 51/02, C04B 26/28, B22C 1/22

(21) Anmeldenummer: **92116219.4**

(22) Anmeldetag: **23.09.1992**

(54) **Formkörper**

Moulding bodies

Corps pour le moulage

(84) Benannte Vertragsstaaten:
**DE FR GB IT NL SE**

(30) Priorität: **07.10.1991 DE 4133190**

(43) Veröffentlichungstag der Anmeldung:
**14.04.1993 Patentblatt 1993/15**

(73) Patentinhaber: **BASF Aktiengesellschaft**
**67063 Ludwigshafen (DE)**

(72) Erfinder:
- **Schwerzel, Thomas, Dr.**
**W-6701 Meckenheim (DE)**
- **Wendel, Kurt, Dr.**
**W-6700 Ludwigshafen (DE)**
- **Anselmann, Thomas**
**W-6740 Landau (DE)**
- **Fuessl, Ruediger**
**W-6730 Neustadt (DE)**

(56) Entgegenhaltungen:
**US-A- 3 947 392**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 536 588 B1

## Beschreibung

Die vorliegende Erfindung betrifft Formkörper für den Metallguß auf der Basis von Gießereisanden, die als Bindemittel den Feststoffanteil einer wäßrigen Polymerisatdispersion enthalten, die dadurch erhältlich ist, daß man radikalisch polymerisierbare ungesättigte Monomere in wäßriger Phase in Anwesenheit von 20 bis 75 Gew.-%, bezogen auf die radikalisch zu polymerisierenden Monomeren, eines Monosaccharids, Oligosaccharids, Polysaccharids, oxidativ, hydrolytisch und/oder enzymatisch abgebauten Polysacchariden, chemisch modifizierten Mono-, Oligo- oder Polysacchariden oder Mischungen der genannten Verbindungen nach dem Verfahren der radikalischen wäßrigen Emulsionspolymerisation polymerisiert. Ferner betrifft die vorliegende Erfindung Verfahren zur Herstellung derartiger Formkörper sowie deren Verwendung.

Aus der JP-A 7693722 ist bekannt Gießereiformsand zur Herstellung von Formkörpern für den Metallguß mit Emulsionspolymerisat aus 52 Gew.% Styrol, 44 Gew.-% n-Butylacrylat und 4 Gew.% Methacrylsäure zu binden. Nachteilig an den so erhältlichen Formkörpern ist, daß ihre innere Festigkeit bei erhöhten Temperaturen, wie sie für den Metallguß üblich sind, nicht voll zu befriedigen vermag. In Günther Tegge, Stärke und Stärkederivate, Behr's Verlag, Hamburg 1984, werden Quellstärken, phosphatierte Stärken und abgebaute Stärken für sich als Bindemittel für Gießereiformsand zur Herstellung von Formkörpern für den Metallguß empfohlen. Nachteilig an den so erhältlichen Formkörpern ist, daß ihre innere Festigkeit bereits bei Raumtemperatur nicht voll zu befriedigen vermag.

Aufgabe der vorliegenden Erfindung war daher, Formkörper für den Metallguß auf der Basis von Gießereisanden zur Verfügung zu stellen, die insbesondere bei erhöhter Temperatur eine erhöhte innere Festigkeit aufweisen.

Demgemäß wurden die eingangs definierten Formkörper gefunden.

Besonders geeignete Gießereisande bestehen in der Regel aus körnigem Quarzsand, in bestimmten Fällen aber auch aus Chromit-, Zirkon- oder Olivinsand. Daneben finden auch Schamotte-, Magnesit-, Sillimanit- oder Korundmaterialien Verwendung. Der mittlere 5 Korndurchmesser (Größtdurchmesser) beträgt normalerweise 0,05 bis 0,6 mm.

Als radikalisch polymerisierbare Monomere kommen unter anderen insbesondere monoethylenisch ungesättigte Monomere wie Olefine, z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisen α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremthyl-, -ethyl, -n-butyl, -iso-butyl und -2-ethlyhexylester, Maleinsäuredimethylester oder Maleinsäure-n-butylester, Nitrile α,β-monoethylenisch ungesättigter Carbonsäuren wie Acrylnitril sowie C4-8 konjugierte Diene wie 1,3-Butadien und Isopren in Betracht. Die genannten Monomeren sind im wesentlichen in wäßrigem Medium nicht löslich und bilden in der Regel die Hauptmonomeren, die, bezogen auf die Gesamtmenge der zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20,vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatdispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkyenylreste aufweisende Monomere. Besonders geeignet sind dabei die Di-Ester zweiwertiger Alkohle mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat oder Methylenbisacrylamid. Neben ungesättigte Doppelbindungen aufweisenden Monomeren können in untergeordneten Mengen, üblicherweise 0,01 bis 4 Gew.-% bezogen auf die zu polymerisierenden Monomeren, das Molekulargewicht regelnde Substanzen wie tert.-Dodecylmercaptan miteinpolymerisiert werden. Vorzugsweise werden derartige Substanzen im Gemisch mit den zu polymerisierenden Monomeren der Polymerisationszone zugegeben.

Bevorzugte Klassen von erfindungsgemäß einzusetzenden wäßrigen Polymerisatdispersionen sind solche, deren Polymerisate durch radikalische Polymerisation von Monomerengemischen erhältlich sind, die

- zu 50 bis 100 Gew.-% aus Estern der Acryl- und/oder Methacrylsäure mit 1 bis 12 C-Atome aufweisenden Alkanolen und/oder Styrol (Klasse I)

oder

- zu 70 bis 100 Gew.-% aus Styrol und/oder Butadien (Klasse II)

oder

- zu 70 bis 100 Gew.-% aus Vinylchlorid und/oder Vinylidenchlorid (Klasse III)

zusammengesetzt sind, wobei die Klasse I besonders bevorzugt ist und vorzugsweise nachfolgende Monomerenzusammensetzungen umfaßt:

| | |
|---|---|
| 90 bis 99 Gew.-% | aus Estern der Acryl- und/oder Methacrylsäure mit 1 bis 8 C-Atome aufweisenden Alkanolen und/ oder Styrol und |
| 1 bis 10 Gew.-% | Acrylsäure, Methacrylsäure oder deren Gemisch. |

Von ganz besonderem Interesse sind die nachfolgenden Monomerenzusammensetzungen:

| | |
|---|---|
| 90 bis 99 Gew.-% | n-Butylacrylat und/oder Styrol |
| 1 bis 10 Gew.-% | Acrylsäure und/oder Methacrylsäure. |

Die Polymerisation der genannten Monomeren erfolgt erfindungsgemäß nach dem Verfahren der radikalischen wäßrigen Emulsionspolymerisation in Anwesenheit von Polysacchariden, Oligosacchariden, Monosacchariden und/ oder deren Derivaten. Sie können pflanzlichen oder tierischen Ursprungs, in Wasser löslich oder nur darin dispergierbar sein. Geeignet sind unter anderem die sogenannten Quellstärken, die beispielsweise durch hydrothermische Behandlung von nativer Stärke erhältlich sind. Ferner eignen sich dünnkochende Stärken. Es handelt es dabei um mit Säuren oder Enzymen geringfügig abgebaute oder mit milden Oxidationsmitteln oxidierte Stärken, die auch in höheren Konzentrationen beim Kochen mit Wasser keine viskosen Kleister sondern relativ dünne Flüssigkeiten ergeben. Außerdem sind säuremodifizierte Stärken geeignet, die durch Erwärmen einer wäßrigen Stärkesuspension unterhalb der Verkleisterungstemperatur in Gegenwart geringer Säuremengen gewonnen werden. Weiterhin kommen oxidativ modifizierte Stärken in Betracht. Als Oxidationsmittel können z.B. Chromsäure, Permanganat, Wasserstoffperoxid, Stickstoffdioxid, Hypochlorit oder Perjodsäure herangezogen werden. Als Ausgangsstärken sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet. Besonders vorteilhaft ist die Verwendung von Röstdextrinen, wie sie z.B. in der EP-A 408 099 sowie in der EP-A 334 515 beschrieben sind. Sie sind durch Erhitzen von feuchttrockner Stärke, meist in Anwesenheit geringer Mengen Säure, erhältlich. Typische Röstdextrine sind z.B. im Handel erhältliche Weiß- und Gelbdextrine; ferner zählen dazu Dextrine, die unter dem Warenzeichen Noredux® und Tackidex® vertrieben werden. Der Begriff Dextrin wird hier ganz generell für Stärkeabbauprodukte verwendet. Mit ganz besonderem Vorteil wird jedoch die radikalische Emulsionspolymerisation in Gegenwart von verzuckerten Stärken empfohlen. Hierbei handelt es sich um ein durch Hydrolyse in wäßriger Phase erhältliches Stärkeabbauprodukt, das vorzugsweise ein gewichtsmittleres Molekulargewicht $M_w$ von 2500 bis 25000 aufweist. Detailliertere Angaben zur Herstellung der genannten Stärken und Stärkederivate findet man in G. Tegge, Stärke und Stärkederivate, Behr's Verlag, Hamburg 1984. Selbstverständlich können die genannten Stärken und Stärkederivate in z.B. durch Veretherung oder Veresterung chemisch modifizierter Form erfindungsgemäß angewendet werden.

Diese chemische Modifizierung kann bereits an der Ausgangsstärke vor deren Abbau oder danach durchgeführt werden. Veresterungen sind sowohl mit anorganischen als auch mit organischen Säuren, deren Anhydriden oder Chloriden möglich. Von besonderem Interesse sind phosphatierte und acetylierte Derivate. Die gängigste Methode zur Veretherung ist die Behandlung mit organischen Halogenverbindungen, Epoxiden oder Sulfaten in wäßriger alkalischer Lösung. Besonders geeignete Ether sind Alkylether, Hydroxyalkylether, Carboxyalkylether und Allylether. Ferner kommen cyanalkylierte Derivate sowie Umsetzungsprodukte mit 2,3-Epoxipropyltrimethylammoniumchlorid in Betracht. Chemisch nicht modifizierte Produkte sind bevorzugt. Selbstverständlich eignen sich auch Mono- und Oligosaccharide sowie Abbauprodukte der Cellulose, beispielsweise Cellobiose und ihre Oligomeren.

Die erfindungsgemäß ganz besonders bevorzugt anzuwendenden verzuckerten Stärken eines gewichtsmittleren Molekulargewichtes von 2500 bis 25000 sind als solche im Handel erhältlich (z.B. die C* PUR Produkte 01906, 01908, 01910, 01912, 01915, 01921, 01924, 01932 oder 01934 der Cerestar Deutschland GmbH, D-4150 Krefeld 12). Derartige verzuckerte Stärken sind von den Röstdextrinen u.a. dadurch chemisch verschieden, daß bei einem hydrolytischen Abbau in wäßrigem Medium (üblicherweise Suspensionen oder Lösungen), der in der Regel bei Feststoffgehalten von 10 bis 30 Gew.% sowie vorzugsweise säure- oder enzymkatalysiert vorgenommen wird, die Möglichkeit der Rekombination und Verzweigung im wesentlichen nicht gegeben ist, was sich nicht zuletzt auch in anderen Molekulargewichtsverteilungen äußert. So haben sich verzuckerte Stärken, die eine bimodale Molekulargewichtsverteilung aufweisen, erfindungsgemäß als besonders vorteilhaft erwiesen. Die Herstellung verzuckerter Stärken ist allgemein bekannt und u.a. in G. Tegge, Stärke und Stärkederivate, Behr's Verlag, Hamburg 1984, S. 173 und S. 220ff sowie in der EP-A 441 197 beschrieben. Vorzugsweise handelt es sich bei den erfindungsgemäß zu verwendenden verzuckerten Stärken um solche, deren gewichtsmittleres Molekulargewicht $M_w$ im Bereich von 4000 bis 16000, besonders bevorzugt im Bereich von 6500 bis 13000 liegt.

Die erfindungsgemäß zu verwendenden verzuckerten Stärken sind normalerweise bei Raumtemperatur in Wasser vollständig löslich, wobei die Löslichkeitsgrenze in der Regel oberhalb von 50 Gew.-% liegt, was sich für die Herstellung der erfindungsgemäßen wäßrigen Polymerisatdispersionen als besonders vorteilhaft erweist.

Es hat sich ferner als günstig erwiesen, wenn die erfindungsgemäß zu verwendenden verzuckerten Stärken eine Unheitlichkeit U (definiert als Verhältnis von gewichtsmittlerem Molekulargewicht $M_w$ zu zahlenmittlerem Molekulargewicht $M_n$; U charakterisiert die Molekulargewichtsverteilung) im Bereich von 6 bis 12 aufweisen. Besonders vorteilhaft beträgt U 7 bis 11 und ganz besonders günstig ist ein U von 8 bis 10.

Ferner ist es von Vorteil, wenn der Gewichtsanteil der erfindungsgemäß zu verwendenden verzuckerten Stärken, der ein Molekulargewicht unterhalb von 1000 aufweist, wenigstens 10 Gew.-%, jedoch nicht mehr als 70 Gew.-% beträgt. Besonders bevorzugt liegt dieser Gewichtsanteil im Bereich von 20 bis 40 Gew.-%.

Darüber hinaus ist es empfehlenswert, solche erfindungsgemäß zu verwendenden verzuckerten Stärken anzuwenden, deren Dextroseequivalent DE 5 bis 40, vorzugsweise 10 bis 30 und besonders bevorzugt 10 bis 20 beträgt. Der DE-Wert charakterisiert das Reduktionsvermögen bezogen auf das Reduktionsver- mögen von wasserfreier Dextrose und wird nach DIN 10308 Ausgabe 5.71, des Normenausschusses Lebensmittel und landwirtschaftliche Produkte, bestimmt (vgl. auch Günther Tegge, Stärke und Stärkederivate, Behr's Verlag, Hamburg 1984, S. 305).

Außerdem hat es sich gezeigt, daß in ihrem Eigenschaftsprofil besonders günstige wäßrige Polymerisatdispersionen dann erhalten werden, wenn man erfindungsgemäß zu verwendende verzuckerte Stärken einsetzt, deren 40 gew.-%igen wäßrigen Lösungen bei 25°C und einem Schergefälle von 75 $s^{-1}$ eine nach DIN 53 019 bestimmte dynamische Viskosität $\eta^{40}$ [Pa·s] von 0,01 bis 0,06, vorzugsweise von 0,015 bis 0,04 und besonders bevorzugt von 0,02 bis 0,035 aufweisen.

An dieser Stelle sei festgehalten, daß in dieser Schrift, sofern nichts anderes erwähnt ist, Aussagen über das Molekulargewicht von erfindungsgemäß zu verwendenden Sacchariden und deren Derivaten auf Bestimmungen mittels der Gelpermeationschromatographie beruhen, wobei unter folgenden Bedingungen chromatographiert wurde:

| | |
|---|---|
| Säulen: | 3 Stück 7.5 x 600 mm Stahl gefüllt mit TSK-Gel G 2000 PW; G 3000 PW u. G 4000 PW. Porenw. 5 µm |
| Eluent: | Wasser dest. |
| Temp.: | RT (Raumtemperatur) |
| Detektion: | Differentialrefraktometer (z.B. ERC 7511) |
| Fluss: | 0.8 ml/min. Pumpe: (z.B. ERC 64.00) |
| Injectv.: | 20 µl Ventil: (z.B. VICI 6-Wege-Ventil) |
| Auswertung: | Bruker Chromstar GPC-Software |
| Eichung: | Die Eichung erfolgte im niedermolekularen Bereich mit Glucose, Raffinose, Maltose und Maltopentose. Für den höhermolekularen Bereich wurden Pullulan-Standards mit einer Polydispersität < 1.2 verwendet. |

Die erfindungsgemäß während der radikalischen wäßrigen Emulsionspolymerisation anwesenden Mono-, Oligo-, Polysaccharide und/oder deren Derivate können sowohl als einzige Dispergiermittel als auch im Gemisch mit anderen grenzflächenaktiven Substanzen anwesend sein.

Als begleitende grenzflächenaktive Substanzen kommen prinzipiell die ansonsten als Dispergiermittel üblicherweise eingesetzten Schutzkolloide und Emulgatoren in Betracht. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als begleitende Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren relative Molekulargewichte im Unterschied zu den Schutzkolloiden üblicherweise unter 2000 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als begleitende grenzflächenaktive Substanzen verwendet. Gebräuchliche begleitende Emulgatoren sind z.B. ethoxylierte Fettalkohole (EO-Grad: 3 bis 50, Alkylrest: $C_8$ bis $C_{36}$), ethoxylierte Mono-, Di- und Tri-Alkylphenole (EO-Grad: 3 bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxylierten Alkanolen (EO-Grad: 4 bis 30, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg Thieme Verlag, Stuttgart, 1961, Seiten 192 bis 208. Begleitende grenzflächenaktive Substanzen werden in der Regel in Mengen von bis zu 5 Gew.-%, bezogen auf die Menge der zu polymerisierenden Monomeren, mitverwendet.

Die Emulsionspolymerisationstemperatur beträgt in der Regel 30 bis 95, vorzugsweise 75 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. In anwendungstechnisch vorteilhafter Weise enthält die Vorlage und/oder der Monomerenzulauf geringe Mengen an Emulgatoren, bezogen auf die Gesamtmenge der zu polymerisierenden Monomeren in der Regel weniger als 0,5 Gew.-%, um die Oberflächenspannung des Dispergiermediums zu reduzieren und so das Einrühren zu erleichtern. Häufig werden die Monomeren daher in mit diesen Hilfsemulgatoren voremulgierter Weise der Polymerisationszone zugeführt. Mit Vorteil ist die Gesamtmenge des zu verwendenden Mono-, Oligo-, Polysaccharids und/oder deren Derivate in einer wäßrigen Vorlage enthalten.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate oder $H_2O_2$, als auch um Azoverbindungen handeln.

Geeignet sind auch kombinierte Systeme, die aus wenigstens einem organischen Reduktionsmittel und wenistens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetallbisulfit und anstelle von Wasserstoffperoxid tert.-Butylhydroperoxid oder Alkalimetallperoxidisulfate und/oder Ammoniumperoxidisulfate angewendet werden. Bei den kombinierten Systemen ist es ferner zweckmäßig, die verzuckerten Stärken als reduzierende Komponente zu verwenden. In der Regel beträgt die Menge der eingesetzten radikalischen Initiatorsysteme, bezogen auf die Gesamtmenge der zu polymerisierenden Monomeren 0,1 bis 2 Gew.-%. Besonders bevorzugt werden Ammonium- und/oder Alkalimetallperoxidisulfate für sich oder als Bestandteil kombinierter Systeme als Initiatoren eingesetzt. Besonders bevorzugt wird Natriumperoxidisulfat verwendet.

Die Art und Weise, in der das radikalische Initiatorsystem im Verlauf der erfindungsgemäßen radikalischen wäßrigen Emulsionspolymerisation dem Polymerisationsgefäß zugegeben wird, ist eher von untergeordneter Bedeutung. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Selbstverständlich kann die erfindungsgemäße radikalische wäßrige Emulsionspolymerisation auch unter erhöhtem oder reduziertem Druck erfolgen.

Die erfindungsgemäßen wäßrigen Polymerisatdispersionen werden in der Regel mit Gesamtfeststoffgehalten von

15 bis 65 Gew.-% hergestellt, wobei diejenigen anwendungstechnisch besonders bevorzugt sind, die 20 bis 60 Gew.-%, bezogen auf die zu polymerisierenden Monomeren, erfindungsgemäß zu verwendende Mono-, Oligo-, Polysaccharide und/oder deren Derivate enthalten.

Als Bindemittel für Gießereisande zur Herstellung von Formen für den Metallguß eignen sich in ganz besonders vorteilhafter Weise erfindungsgemäße wäßrige Polymerisatdispersionen, deren Polymerisate durch radikalische Polymerisation von Monomerengemischen erhältlich sind, die nachfolgende Monomerenzusammensetzung, bestehend aus

| | |
|---|---|
| 39 bis 69 Gew.-% | wenigstens eines Esters aus 3 bis 6 C-Atome aufweisenden $\alpha,\beta$-monoethylenisch ungesättigten Mono- und Dicarbonsäuren und 1 bis 6 C-Atome aufweisenden Alkanolen (Monomere a), |
| 30 bis 60 Gew.-% | Styrol (Monomeres b), |
| 1 bis 10 Gew.-% | wenigstens eines Monomeren aus der Gruppe umfassend 3 bis 6 C-Atome aufweisende $\alpha,\beta$-monoethylenisch ungesättigte Carbonsäuren, deren Amide und Nitrile (Monomere c) und |
| 0 bis 10 Gew.-% | eines oder mehrerer Monomeren aus der Gruppe umfassend N-Alkylolamide von 3 bis 6 C Atome umfassenden $\alpha,\beta$-monoethylenisch ungesättigte Carbonsäuren mit 1 bis 4 C-Atomen in der Alkylgruppe und bis zu 25 C-Atome enthaltende zwei nicht konjugierte ethylenisch umgesättigte Doppelbindungen aufweisende Monomere (Monomere d), |

aufweisen und die, bezogen auf die zu polymerisierenden Monomeren 35 bis 65 und besonders bevorzugt 35 bis 55 Gew.-% Mono-, Oligo-, Polysaccharide und/oder deren Derivate enthalten. Selbstverständlich können die Monomeren durch andere in dieser Schrift genannte vernetzend wirkende Monomere ganz oder teilweise ersetzt werden.

Die Überführung der Gießereisande in als Gießereiformen verwendbare Gießereiformkörper erfolgt im allgemeinen so, daß man den Gießereisand mit den erfindungsgemäß zu verwendenden wäßrigen Polymerisatdispersionen unter Einstellung des gewünschten Bindemittelgehaltes, in der Regel (trocken gerechnet) 0,1 bis 10, vorzugsweise 0,1 bis 5 Gew.-%, bezogen auf die Menge Gießereisand, mischt, die Mischung (hier Mörtel genannt) gegebenenfalls nach Zusatz an sich bekannter Hilfsmittel formt (z.B. in eine Form [Negativ] geben), durch Ausübung von Druck gegebenenfalls verdichtet und anschließend härtet.

Bemerkenswert ist, daß bei Verwendung der erfindungsgemäßen wäßrigen Polymerisatdispersionen, die üblicherweise für diesen Zweck mit einem Gesamtfeststoffgehalt von 40 bis 60 Gew.-% angewendet werden, der Härtungsprozeß nicht notwendigerweise die Anwendung erhöhter Temperaturen (normalerweise 50 bis 250°C) erfordert, sondern auch durch sich selbst überlassen bei Raumtemperatur mit befriedigender Geschwindigkeit ein Durchhärten erfolgt. In anwendungstechnisch besonders geschickter Weise kann das Durchhärten auch dadurch erzielt werden, daß man die auszuhärtende Masse der Einwirkung von Mikrowellen aussetzt. Mit besonderem Vorteil werden diesbezüglich erfindungsgemäße wäßrige Polymerisatdispersionen empfohlen, die durch radikalische wäßrige Emulsionspolymerisation von Gemischen aus Monomeren a, b, c und d erhältlich sind, deren Monomerenzusammensetzung so gewählt ist, daß ein nur aus den Monomeren a, b und c aufgebautes Polymerisat eine Glasübergangstemperatur im Bereich von 0 bis 40°C aufweisen würde.

Nach Fox (T.G. Fox, Bull. Am. Phys. Soc. (Ser. II) 1, 123 [1956]) gilt für die Glasübergangstemperatur von Mischpolymerisaten in guter Näherung:

$$\frac{1}{Tg} = \frac{X^1}{Tg^1} + \frac{X^2}{Tg^2} + \cdots \frac{X^s}{Tg^s}$$

wobei $X^1$, $X^2$ ..., $X^s$ die Massenbrüche der Monomeren 1, 2, ..., s und $Tg^1$, $Tg^2$, ..., $Tg^s$ die Glasübergangstemperaturen der jeweils nur aus einem der Monomeren 1, 2, ..., s aufgebauten Polymeren in Grad Kelvin bedeuten. Die Glasübergangstemperaturen der Monomeren a, b und c sind im wesentlichen bekannt und z.B. in J. Brandrup, E.H. Immergut, Polymer Handbook 1st Ed. J. Wiley, New York 1966 und 2nd Ed. J. Wiley, New York 1975, aufgeführt.

Ein weiterer Vorteil bei Verwendung der erfindungsgemäßen wäßrigen Polymerisatdispersionen ist, daß der durchgehärtete Formkörper, als Maß für seine innere Festigkeit, eine erhöhte Biegefestigkeit, insbesondere bei erhöhter Temperatur, aufweist. Dies gewährleistet eine erhöhte Formstabilität, vor allem bei erhöhter Temperatur, insbesondere in Gegenwart heißer Metallschmelzen. Ferner kann die Negativform nach Entnahme des Formkörpers in der Regel in einfacher Weise mit Wasser gereinigt und der Formkörper selbst bei Bedarf durch Wasserzusatz in nicht gehärteten Mörtel rückgeführt werden (üblicherweise ist Redispergierbarkeit gegeben), was einer unendlich langen Zeit der Verarbeitbarkeit des Mörtels gleichkommt. Enthalten die Polymerisate Monomere d mit eingebaut, resultieren besonders

hohe Biegefestigkeiten. Darüberhinaus lassen sich die Biegefestigkeiten weiter erhöhen, indem man vor Anwendung den erfindungsgemäß anzuwendenden wäßrigen Polymerisatdispersionen in Mengen von bis zu 20 Gew.-%, bezogen auf polymerisierte Monomere, gesättigte Dialdehyde, vorzugsweise solche der allgemeinen Formel I

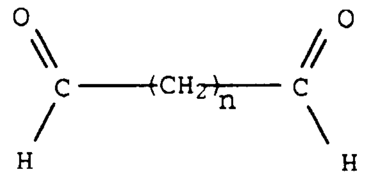

(n = 0 bis 10) (I),

zusetzt, wobei solche Dialdehyde der allgemeinen Formel I mit n = 0 bis 2 bevorzugt sind. Ferner kommen als die Biegefestigkeit erhöhende Zusätze Kondensationsprodukte auf der Basis Formaldehyd, Melamin, Phenol und/oder Harnstoff, z.B. Urecoll® 118, in Betracht. Die zu verwendenden Mengen können sich dabei, bezogen auf den abzüglich der verzuckerten Stärke bestimmten Feststoffgehalt der erfindungsgemäßen wäßrigen Polymerisatdispersionen, auf bis zu 250 Gew.-% belaufen.

Die letztgenannten Zusätze wirken jedoch nur dann in der beschriebenen Weise vorteilhaft, wenn die Härtung bei erhöhter Temperatur, in der Regel 100 bis 250°C, oder in Anwesentheit von Säure erfolgt. Letzteres ist in einfacher Weise dadurch realisierbar, daß man den pH-Wert des Dispersionsmediums der erfindungsgemäß zu verwendenden wäßrigen Polymerisatdispersionen auf 1 bis 5, vorzugsweise auf 2 bis 3 einstellt. Werden Biegefestigkeiten im üblichen Rahmen verlangt, arbeitet man vorzugsweise ohne Zusätze.

Die bei Verwendung von Gießereisanden erhältlichen, als Gußformen verwendbaren, Formkörper weisen als weitere Eigenschaften auf:

- gute Beständigkeit gegen Erosion durch geschmolzenes Metall
- glatte und geschlossene Oberflächen des Gußkörpers
- gute Entfernbarkeit nach dem Guß
- minimaler Nachreinigungsaufwand für die Gußstücke
- minimale Entwicklung toxischer Gase beim Guß.

Beispiele

1) Herstellung von erfindungsgemäß zu verwendenden wäßrigen Polymerisatdispersionen

Ein Gemisch aus

400 g Wasser
200 g verzuckerter Stärke C* PUR 01910
71 g Zulauf 1 und
10 g Zulauf 2

wurde auf 85°C erhitzt und 15 min bei dieser Temperatur gehalten. Anschließend wurden unter Aufrechterhaltung der 85°C zeitgleich beginnend die Restmengen der Zuläufe 1 und 2 kontinuierlich (Zulauf 1 innerhalb 2,5 h, Zulauf 2 innerhalb 3 h) der Polymerisationszone zugeführt. Dann wurde eine Stunde (85°C) nachpolymerisiert und auf Raumtemperatur abgekühlt. Der Gesamtfeststoffgehalt der resultierenden wäßrigen Polymerisatdispersion betrug ca.
50 Gew.-%.

Zulauf 1: 275 g n-Butylacrylat
215 g Styrol
10 g Acrylsäure

voremulgiert in 204 g Wasser mittels 0,5 g des Na-Salzes der Dodecylbenzolsulfonsäure.

Zulauf 2: 2,5 g Natriumperoxidsulfat in 100 g Wasser gelöst.

2) Erfindungsgemäße Formkörper

1000 g Quarzsand H 33 wurden mit verschiedenen Mengen (in der Tabelle angegeben in Gew.-% bezogen auf Sand, trocken gerechnet) erfindungsgemäßer, C* Pur 01910 enthaltender, wäßriger Polymerisatdispersionen eines Gesamtfeststoffgehalts von 50 Gew.-%, denen teilweise pro Gewichtsteil enthaltener verzuckerter Stärke 0,125 Gew.-Teile Glyoxal oder 1,075 Gew.-Teile Urecoll 118 zugesetzt wurden, vermischt.

Anschließend wurde das Gemisch in eine Form gegeben und mittels einer Ramme (G. Fischer AG, Schaffhausen, Schweiz) mit einem Gewicht der Masse 6,7 kg bei einer Fallhöhe von 5 cm drei Mal verdichtet. Die so erhaltenen Formkörper (Fischer-Giegel) hatten bei abgerundeten Enden folgende Dimensionen:

| | |
|---|---|
| Länge ca. | 173 mm |
| Breite ca. | 22 mm |
| Höhe ca | 22 mm |

Danach wurden die Riegel unter verschiedenen Bedingungen getrocknet und anschließend die Biegefestigkeit bei Raumtemperatur mit einem G. Fischer AG (Schaffhausen, Schweiz) Prüfgerät bestimmt.

Die Herstellung der verwendeten erfindungsgemäßen wäßrigen Polymerisatdispersionen entsprach in allen Fällen Beispiel 1, jedoch mit teilweise davon verschiedener Monomerenzusammensetzung sowie, bezogen auf die Monomeren, anderen Mengen verzuckerter Stärke C* Pur 01910. Detailliertere Angaben und die Ergebnisse zeigt die Tabelle. Die Mengenangaben hinsichtlich der Stärke sind jeweils auf die Gesamtmenge der zu polymerisierenden Monomeren bezogen.

Dabei wurden für die Monomeren nachfolgende Abkürzungen verwendet:

| | |
|---|---|
| BA | = n-Butylacrylat |
| St | = Styrol |
| AS | = Acrylsäure |
| MAmol | = N-Methylolmethacrylamid |
| BDA | = Butandiolacrylat |
| DVB | = Divinylbenzol |

Tabelle

| Monomerenzusammensetzung (Gew.-%) | Gew.-% Stärke | Menge Bindemittel | Glyoxal | Urecoll | Trocknungsdauer | Temperatur (°C) | Biegefestigkeit ($N/mm^2$) |
|---|---|---|---|---|---|---|---|
| 55 BA 43 St 2 AS | 40 | 1 | - | - | 10 min | 150 | 1,8 |
| 55 BA 43 St 2 AS | 40 | 2 | - | - | 10 min | 150 | 4,9 |
| 55 BA 43 St 2 AS | 40 | 3 | - | - | 10 min | 150 | 6,0 |
| 55 BA 43 St 2 AS | 40 | 3 | - | - | 30 min | 150 | 5,8 |
| 55 BA 43 St 2 AS | 40 | 3 | + | - | 30 min | 150 | 6,2 |
| 55 BA 43 St 2 AS | 50 | 2 | - | - | 10 min | 150 | 4,9 |
| 45 BA 53 St 2 AS | 40 | 2 | - | - | 10 min | 150 | 6,2 |
| 65 BA 33 St 2 AS | 40 | 2 | - | - | 10 min | 150 | 3,8 |
| 52 BA 41 St 2 AS 5 MAmol | 50 | 2 | - | - | 10 min | 150 | 4,5 |
| 55 BA 42,5 St 2 AS 0,5 BDA | 50 | 2 | - | - | 10 min | 150 | 5,2 |
| 54 BA 42 St 2 AS 2 DVB | 50 | 2 | - | - | 10 min | 150 | 5,0 |
| 50 BA 45 St 5 AS | 40 | 2 | - | - | 10 min | 150 | 5,2 |
| 50 BA 45 St 5 AS | 40 | 2 | - | + | 10 min | 150 | 7,9 |
| 45 BA 53 St 2 AS | 40 | 2 | - | + | 10 min | 150 | 8,7 |
| 45 BA 53 St 2 AS | 40 | 2 | - | + | 10 min | 150 | 2,6 (bei 200°C) |

| Monomerenzusammensetzung (Gew.-%) | Gew.-% Stärke | Menge Bindemittel | Glyoxal | Urecoll | Trocknungsdauer | Temperatur (°C) | Biegefestigkeit ($N/mm^2$) |
|---|---|---|---|---|---|---|---|
| 55 BA 42,5 St 2 AS 0,5 DVB | 50 | 2 | - | - | 3 min | Mikrowelle 1300W | 5,0 |
| 50 BA 45 St 5 AS | 40 | 2 | - | - | 4 h | 25 | 2,5 |
| 50 BA 45 St 5 AS | 40 | 2 | - | - | 6 h | 25 | 5,1 |

Bei Austausch von C* PUR 01910 gegen C* PUR 01906, 01908, 01912, 01915, 01921, 01924, 01932 oder

01934 wurden Ergebnisse derselben Größenordnung erhalten. C* PUR 01910 und 01915 erwiesen sich als besonders vorteilhaft. Die genannten verzuckerten Stärken lassen sich wie folgt charakterisieren:

| Typ | $M_w$ | U | Gew.-% < 1000 | DE | η 40 [Pa·s] |
|---|---|---|---|---|---|
| 01906 | 20080 | 10,9 | 12,2 | 2-5 | - |
| 01908 | 19290 | 10,0 | 15,9 | 8-10 | 0,056 |
| 01910 | 10540-12640 | 8,5-9,9 | 24,7-26,4 | 11-14 | 0,030 |
| 01915 | 6680-8350 | 6,8-8,4 | 32,9-34,7 | 17-19 | 0,021 |
| 01921 | 6700 | 7,4 | 39,1 | 20-23 | 0,017 |
| 01924 | 4730 | 6,8 | 53,6 | 26-30 | 0,014 |
| 01932 | 4500 | 7,9 | 63,2 | 33-35 | 0,011 |
| 01934 | 3000 | 6,0 | 68,4 | 36-39 | 0,009 |

Bestimmungen von $M_n$ mittels Dampfdruckosmose ergaben für die bevorzugten Typen 01910 und 01915 folgende Werte:

1560 g/mol (1910)
980 g/mol (1915)

Vergleichsbeispiel

Beispiel 2 (Trocknungstemp. 150°C, Zeit 10 min) wurde wiederholt, jedoch wurden als Bindemittel (2 Gew.-% bezogen auf Sand, trocken gerechnet) eine konventionelle 50 gew.-%ige wäßrige Dispersion (Va) der Monomerenzusetzung

53 Gew.-% Styrol
45 Gew.-%% n-Butylacrylat und
2 Gew.-% Acrylsäure

oder eine 50 gew.-%ige wäßrige Lösung C* PUR 01910 (Vb) eingesetzt. Die Biegefestigkeit im Falle Vb betrug bei 25°C 0,2 $N/mm^2$ und im Fall Va bei 60°C annähernd 0.

**Patentansprüche**

1. Formkörper für den Metallguß auf der Basis von Gießereisanden, die als Bindemittel den Feststoffanteil einer wäßrigen Polymerisatdispersion enthalten, die dadurch erhältlich ist, daß man radikalisch polymerisierbare ungesättigte Monomere in wäßriger Phase in Anwesenheit von 20 bis 75 Gew.-%, bezogen auf die radikalisch zu polymerisierenden Monomeren, eines Monosaccharids, Oligosaccharids, Polysaccharids, oxidativ, hydrolytisch und/ oder enzymatisch abgebauten Polysacchariden, chemisch modifizierten Mono-, Oligo- oder Polysacchariden oder Mischungen der genannten Verbindungen nach dem Verfahren der radikalischen wäßrigen Emulsionspolymerisation polymerisiert.

2. Verwendung wäßriger Pclymerisatdispersionen, die dadurch erhältlich sind, daß man radikalisch polymerisierbare ungesättigte Monomere in wäßriger Phase in Anwesenheit von 20 bis 75 Gew.-%, bezogen auf die radikalisch zu polymerisierenden Monomeren, eines Monosaccharids, Oligosaccharids, Polysaccharids, oxidativ, hydrolytisch und/oder enzymatisch abgebauten Polysacchariden,chemisch modifizierten Mono-, Oligo- oder Polysacchariden oder Mischungen der genannten Verbindungen nach dem Verfahren der radikalischen wäßrigen Emulsionspolymerisation polymerisiert, als Bindemittel für Formkörper für den Metallguß auf der Basis von Gießereisanden.

3. Verfahren zur Herstellung von Formkörpern gemäß Anspruch 1, dadurch gekennzeichnet, daß man den Gießereisand mit der wäßrigen Polymerisatdispersion mischt, die Mischung formt und härtet.

4. Verwendung von Formkörpern nach Anspruch 1 als Formen für den Metallguß.

**Claims**

1. A molding for casting metal based on a foundry sand containing, as binder, the solid component of an aqueous polymer dispersion which is obtainable by polymerizing unsaturated monomers which can be polymerized by means of free radicals in the aqueous phase in the presence of from 20 to 75% by weight, based on the monomers which are to be polymerized by means of free radicals, of a monosaccharide, oligosaccharide, polysaccharide, oxidatively, hydrolytically and/or enzymatically degraded polysaccharide, chemically modified monosaccharide, oligosaccharide or polysaccharide, or a mixture of the said compounds, by the process of free-radical aqueous emulsion poilymerization.

2. The use of an aqueous polymer dispersion which is obtainable by polymerizing unsaturated monomers which can be polymerized by means of free radicals in the aqueous phase in the presence of from 20 to 75% by weight, based on the monomers which are to be polymerized by means of free radicals, a monosaccharide, oligosaccharide, polysaccharide, oxidatively, hydrolytically and/or enzymatically degraded polysaccharide, chemically modified monosaccharide, oligosaccharide or polysaccharide, or a mixture of the said compounds, by the process of free-radical aqueous emulsion polymerization, as a binder for moldings for casting metal based on foundry sands.

3. A process for the production of a molding as claimed in claim 1, wherein the foundry sand is mixed with the aquous polymer dispersion, and the mixture is molded and cured.

4. The use of a molding as claimed in claim 1 as a mold for casting metal.

**Revendications**

1. Corps moulés pour la coulée de métaux, à base de sables de moulage qui contiennent, en tant que liant, la fraction solide d'une dispersion aqueuse de polymère qui est obtenue en polymérisant, par le procédé de la polymérisation radicalaire en émulsion aqueuse, des monomères insaturés susceptibles de polymérisation radicalaire, en phase aqueuse, en présence de 20 à 75% en poids, par rapport aux monomères à polymériser par voie radicalaire, d'un monosaccharide, d'un oligosaccharide, d'un polysaccharide, de polysaccharides dégradés par oxydation, par hydrolyse et/ou par voie enzymatique, de mono-, oligo- ou polysaccharides modifiés chimiquement ou de mélanges desdits composés.

2. Utilisation de dispersions aqueuses de polymères, qui sont obtenues en polymérisant, par le procédé de la polymérisation radicalaire en émulsion aqueuse, des monomères insaturés susceptibles de polymérisation radicalaire, en phase aqueuse, en présence de 20 à 75% en poids, par rapport aux monomères à polymériser par voie radicalaire, d'un monosaccharide, d'un oligosaccharide, d'un polysaccharide, de polysaccharides dégradés par oxydation, par hydrolyse et/ou par voie enzymatique, de mono-, oligo- ou polysaccharides modifiés chimiquement ou de mélanges desdits composés, comme liant pour des corps moulés pour la coulée de métaux, à base de sables de moulage.

3. Procédé de fabrication de corps moulés selon la revendication 1, caractérisé en ce que l'on mélange le sable de moulage avec la dispersion aqueuse de polymère, on moule le mélange et on le durcit.

4. Utilisation de corps moulés selon la revendication 1 comme moules pour la coulée de métaux.